# EUROPÄISCHE PATENTSCHRIFT

(11) **EP 1 079 935 B1**
(45) Veröffentlichungstag und Bekanntmachung des Hinweises auf die Patenterteilung: **07.05.2003**
(21) Anmeldenummer: 99950330.3
(22) Anmeldetag: 23.02.1999
(51) Int. Cl.: B05B 1/34, F15D 1/06, F15D 1/12

(54) **VORRICHTUNG FÜR VERBESSERTE WIRKSAMKEIT SCHNELL ENTLANG EINES KÖRPERS STRÖMENDER MEDIEN ODER SICH IM MEDIUM SEHR SCHNELL BEWEGENDER KÖRPER UND VERWENDUNG INSBESONDERE ALS HOCHDRUCK-DÜSE**
DEVICE FOR INCREASING THE POWER OF MEDIA FLOWING ALONG A BODY AT A HIGH SPEED OR A VERY FAST MOVING BODY IN A MEDIUM AND USE THEREOF AS A HIGH PRESSURE NOZZLE
DISPOSITIF POUR AUGMENTER LA FORCE D'UN MILIEU S'ECOULANT RAPIDEMENT LE LONG D'UN CORPS OU DE CORPS SE DEPLACANT TRES RAPIDEMENT DANS UN MILIEU, UTILISE EN PARTICULIER EN TANT QUE BUSE HAUTE PRESSION

(30) Priorität: 13.05.1998 DE 19821449
(43) Veröffentlichungstag der Anmeldung: 07.03.2001
(73) Patentinhaber: Moritz, Helmut, 98000 Monaco (MC); Loegel, Charles, sen., 67340 Lichtenberg (FR)
(72) Erfinder: LOEGEL, Charles, sen., F-67340 Lichtenberg (FR)
(74) Vertreter: Müller, Hans-Jürgen, Dipl.-Ing.
(86) Internationale Anmeldenummer: EP9901168
(87) Internationale Veröffentlichungsnummer: WO99058250

(56) Entgegenhaltungen:
- EP-A- 0 679 812
- DE-A- 19 613 304
- US-A- 2 985 384

## Beschreibung

Die Erfindung bezieht sich auf eine Vorrichtung für verbesserte Wirksamkeit schnell an Wandflächen eines Körpers entlangströmender Medien oder umgekehrt sich sehr schnell in einem Medium bewegender Körper sowie auf Verwendungen der Vorrichtung.

Derartige Vorrichtungen sind bei Hochdruck-Düsen zum Erzeugen eines Hochdruck-Flüssigkeitsstrahls bereits bekannt (DE-A-196 13 304, US 1 703 029, EP-A-O 121 951 und DE-A-3 443 263). Dabei ist es vielfach erwünscht, den sogenannten "Strahlwinkel" des aus der Düse austretenden Medienstrahles nicht zu weit aufzuspreizen, sondern möglichst schmal zu halten. Bei schmalen Hochdruck-Strahlen ist der Energiegehalt pro Flächeneinheit des Strahl-querschnitts in der Regel größer als bei einem sehr weit aufgespreizten bzw. zerstäubenden Strahl. Die Wirksamkeit des schnell strömenden Gases oder der Flüssigkeit wird dabei durch sich axial längs der Düsenöffnung hinziehende Kanäle in der Mantelfläche bzw. innere Wandfläche der Düsenbohrung verbessert.

Ferner ist es bekannt (EP 0 679 812 A1), den hydraulichen Grenzschichten-widerstand an die Strömung lenkenden Oberflächen durch stromlinienförmige karitäten besonderer Bemessungen zu verbessern.

Der Erfindung liegt die Aufgabe zugrunde, die Wirksamkeit noch weiter zu verbessern. Dabei ist nicht nur an die Verbesserung der "energetischen" Wirksamkeit des auf einen Gegenstand auftreffenden Strahles gedacht, sondern sollen auch andere Wirksamkeiten schnell strömender Medien in beispielsweise Rohren und Schläuchen oder von sich in Medien sehr schnell bewegender Körper verbessert werden; dadurch kann der Energieaufwand für den Transport des strömenden Mediums oder beispielsweise einer Rakete verbessert bzw. die Geschwindigkeit erhöht werden.

Die Erfindung ist in den Ansprüchen 1 und 14 gekennzeichnet: weitere Ausbildungen sind in Unteransprüchen beansprucht. Anhand der folgenden Beschreibung und der Zeichnungen sind bevorzugte Ausbildungen der Erfindung näher erläutert.

Die Erfindung erlaubt die Wirksamkeit des an der Wandfläche schnell entlangströmenden Mediums oder die Effektivität des sich sehr schnell durch ein Medium bewegenden Körpers zu verbessern auf eine überraschende Weise: Obwohl die Wandfläche in Strömungsrichtung, z. B. Axialrichtung eines Düsenbohrung, nicht stromlinienförmig Kontinuierlich,sondern ausgesprochen uneben mit unterbrechungen und rinnenförmig ausgebildet ist, wird die Wirksamkeit verbessert.

Nach dem allgemeinen Prinzip der vorliegenden Erfindung wird mindestens eine Wandfläche eines festen Körpers, der das schnell strömende Medium seitlich begrenzt und in eine bestimmte Richtung lenkt, mit einer Mehrzahl sich mindestens eine Länge bzw. Strecke weit in Strömungsrichtung erstreckenden Vertiefungen versehen, deren Tiefe wesentlich kleiner ist als deren Länge. Die Vertiefungstiefe beträgt bevorzugt 0,01 bis 2 mm, insbesondere 0,1-0,8 mm. Derartige Vertiefungen sind als rinnenförmige Vertiefungen bevorzugt in der Art von Axialrinnen ausgebildet, die sich aber nicht über die gesamte Länge der Wandfläche in Strömungsrichtung erstrecken, sondern deren Länge wesentlich geringer ist als die Länge der betreffenden Wandfläche, so daß in Strömungsrichtung mehrere derartige Vertiefungen im Abstand voneinander "hintereinander" angeordnet sind. Dabei nimmt die Tiefe jedenfalls von Teilen der Vertiefungen in Strömungsrichtung ab. Die Vertiefungen können zu einer Staustelle im Strömungskanal führen oder auch selbst gewisse "Staustellen" bilden, so daß der Strömungswiderstand des Mediums sich in Strömungsrichtung ändert, insbesondere mehrmals zwischen unterschiedlichen Werten wechselt.

Ist die Wandfläche des festen Körpers als innere Rohrmantelfläche eines Rohres ausgebildet, dann empfiehlt es sich, die Vertiefung so in die Rohrmantelfläche einzuformen, daß sie im wesentlichen in Strömungsrichtung ausgesprochene Führungskanten bilden und möglichst gleichmäßig über den Umfang des Strömungskanals verteilt sind. Es hat sich gezeigt, daß bei Hochdruck-Wasserstrahl-Düsen kleinen Durchtrittsquerschnitts mindestens vier, besser fünf oder sechs solcher Axialrinnen im Strömungskanal angeordnet sein sollten, während bei z. B. Feuerwehr-Löschlanzen größerer Durchschnittsquerschnitte im Bereich mehrerer Zentimeter noch mehr, z. B. 12 Axialrinnen, vorhanden sein sollten.

Es hat sich gezeigt, daß die Summe der Flächenanteile an der betreffenden Wandfläche, die von Vertiefungen gebildet sind, im Verhältnis zur Summe der Wandflächenanteile, die keinen Vertiefungen entsprechen, größer als 1 sein sollte. Der Anteil der Vertiefungen zugeordneten Flächen am Gesamtflächenanteil beträgt bevorzugt 0,7 insbesondere zwischen 0,8 und 0,9, wodurch die "Rauhigkeit" der Wandfläche sehr groß wird.

Darüber hinaus empfiehlt es sich, den Durchschnittsquerschnitt des Strömungskanals in Strömungsrichtung abnehmen zu lassen, so daß sich ein Öffnungswinkel α zwischen 1° und 13°, insbesondere zwischen 2,8° und 3,8°, entgegen der Strömungsrichtung des Mediums ergibt.

Zu einer noch wesentlich größeren Verbesserung trägt bei, wenn am Ende des Strömungskanals durch eine kleine Stau- oder Aufprallschulter ein zusätzlicher abrupter Strömungswiderstand erzeugt wird, ehe das strömende Medium aus dem genannten Strömungskanal in eine im Querschnitt wesentlich kleinerere Durchtrittsöffnung eines Düseneinsatzes aus insbesondere Hartstoff eintritt, durch welche der Strahl dann die Düse verläßt.

Eine im Querschnitt sternartige Anordnung der Axialrinnen führt zu günstigen Ergebnissen.

So hat sich gezeigt, daß die Wirksamkeit eines gemäß der Erfindung erzeugten schmalen Hochdruck-Wasserstrahls gegenüber einem mit üblichen Hochdruck-Düsen erzeugten Wasserstrahl bei gleichem Wasserdruck von 1.200 bar völlig überraschenderweise um etwa 350 % verbessert werden kann. Wird beispielsweise mit einer üblichen Hochdruck-Düse mit zylindrischem Innenquerschnitt des Strömungskanals unter dem o.g. Druck und unter einer Förderleistung von 10 l/min Wasser in Gesteinsformationen ein Schlitz eingebracht, dann wird bei einer bestimmten Schlitztiefe eine "Schnittleistung" von 2 m²/h erzielt. Wird diese bekannte Düse durch eine erfindungsgemäß ausgebildete Düse ersetzt, ergibt sich nicht nur bei gleichem Druck eine größere Förderleistung zwischen 11 und 11,5 l/min Wasser, sondern wird bei gleichem Gestein und sonst gleichen Bedingungen eine Schnittleistung von 7 m²/h erreicht. Im Vergleich zu der Förderleistung von 2 m²/h im erstgenannten Fall bedeutet dies eine Vervielfachung um das 3,5fache.

Die Erfindung ist aber auch anwendbar auf anderen Gebieten, beispielsweise bei Pipeline-Rohren und Turbinen, deren Innenmantel mit derartigen sich in Axialrichtung erstreckenden und in dieser Richtung voneinander beabstandeten flachen Vertiefungen rings um den Umfang versehen ist. Auch bei TurbinenSchaufeln und von Leitschaufeln anderer Strömungsmaschinen ist die Erfindung anwendbar.

Gleichfalls erhebliche Verbesserungen ergeben sich, wenn die Innenflächen von Ansaugrohren und Ansaugkrümmern von Automobil- oder anderen Vergasern mit nicht zu tiefen entsprechenden Vertiefungen versehen werden. Auch für die Abgasrohre und Abgaskrümmer ist die Erfindung anwendbar, so daß sich auf dem Gebiet der Verbrennungsmotoren insbesondere von Kraftfahrzeugen überraschenderweise Verbesserungen von mehreren Prozent hinsichtlich geringeren Kraftstoffbedarfs bei besserer Ausgangsleistung ergeben. Dieses Ergebnis ist völlig überraschend, da bisher davon ausgegangen wurde, daß die dem strömenden Medium ausgesetzten Wand- und Ablenkflächen möglichst eben ausgebildet sein sollen.

Der Grund für die überraschenden Ergebnisse ist theoretisch und wissenschaftlich noch nicht genügend analysiert worden. Es wird vermutet, daß Grenzschichteffekte auftreten, das heißt, daß die Erfindung die Grenzschicht zwischen dem strömendem Medium im mantelflächennahen Bereich einerseits und mantelflächenferneren Bereichen andererseits so beeinflußt, daß eine wirksamere Verteilung zwischen laminarer und turbulenter Strömung auftritt und hierdurch dem strömenden Medium entlang der Mantel-, Ablenk- bzw. Strömungsfläche weniger Energie entzogen wird, obwohl prima facie anzunehmen war, daß derartige "Unterbrechungen" der Wandflächen bzw. Mantelflächen das Gegenteil erreichen lassen. Dem strömenden Medium wird bei der Erfindung überraschenderweise weniger z. B. kinetische Energie entzogen. Es wird vermutet, daß durch die Erfindung die sogenannte Umschlaglinie weit stromab verlegt werden kann, was die Trennungsfläche bei Potentialströmungen begünstigen hilft. Turbulenzwirkungen werden vermindert.

Entsprechend wird auch empfohlen, die Erfindung bei Strömungsflächen von Luftfahrzeugen und vor allem sehr schnell fliegenden Geschossen, wie Raketen, anzuwenden, bei denen zwar das diese Körper umgebende Medium selbst nicht schnell strömen oder fließen muß, sondern selbst stillstehen kann. Da aber der schnell bewegte Körper eine große Geschwindigkeiten aufweist, ergibt sich an der Grenzfläche zwischen dem Medium Flüssigkeit oder Gas einerseits und dem Körper andererseits gleichfalls eine entsprechende Wirkung.

Anhand der Zeichnung werden Ausführungsbeispiele der Erfindung näher erläutert. Dabei zeigen:
Fig. 1 einen Längsschnitt durch eine Hochdruckdüse;
Fig. 2 den Querschnitt gemäß A-A von Fig. 1 sowie
Fig. 2a einen vergrößerten Halbquerschnitt davon;
Fig. 3 einen vergrößerten Ausschnitt aus dem Übergang zwischen einer Vorsatzbuchse und einem sich daran anschließenden Hartstoff-Einsatz der HD-Düse unter Strömungsverhältnissen;
Fig. 4 einen anderen Querschnitt des Strömungskanals der Vorsatzbuchse;
Fig. 5 einen schematischen Längschnitt durch ein Pipeline-Rohr und Teilaufsicht auf dessen innere Mantelfläche sowie
Fig. 6 eine schematische Querschnittzeichnung auf einen Flugzeugtragflügel.

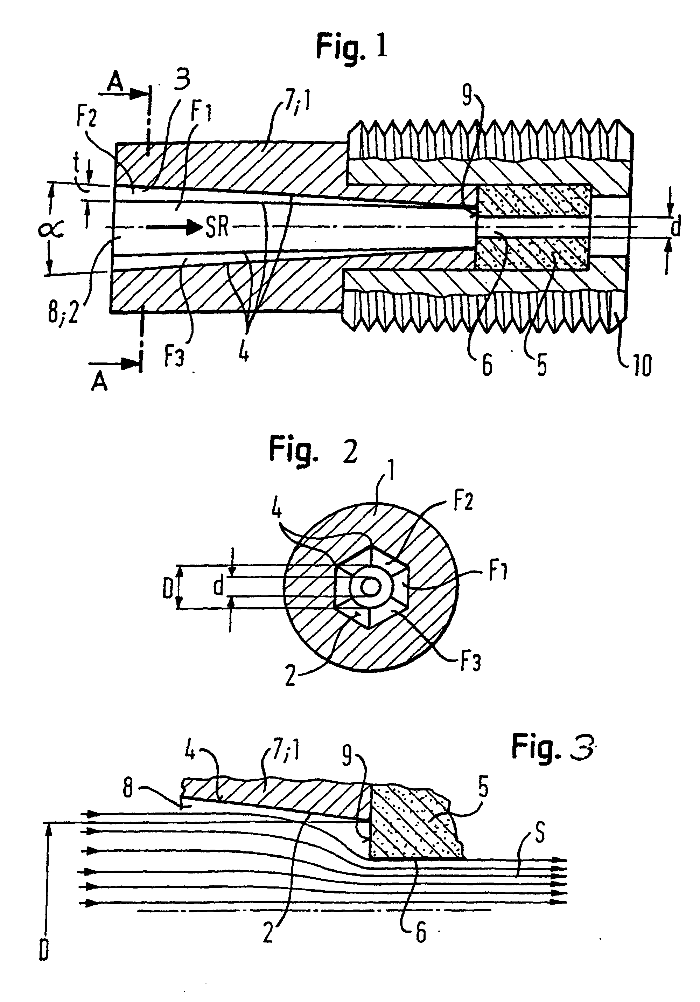

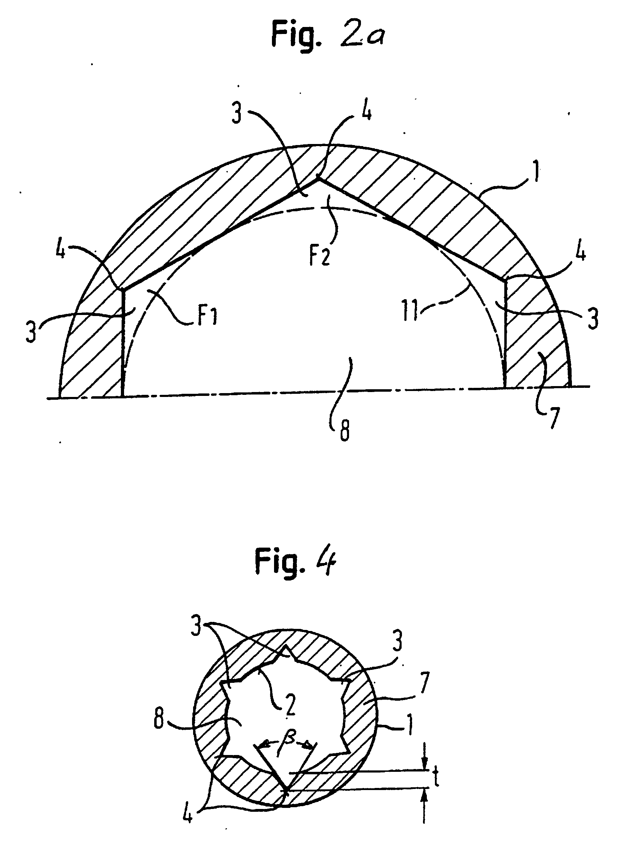

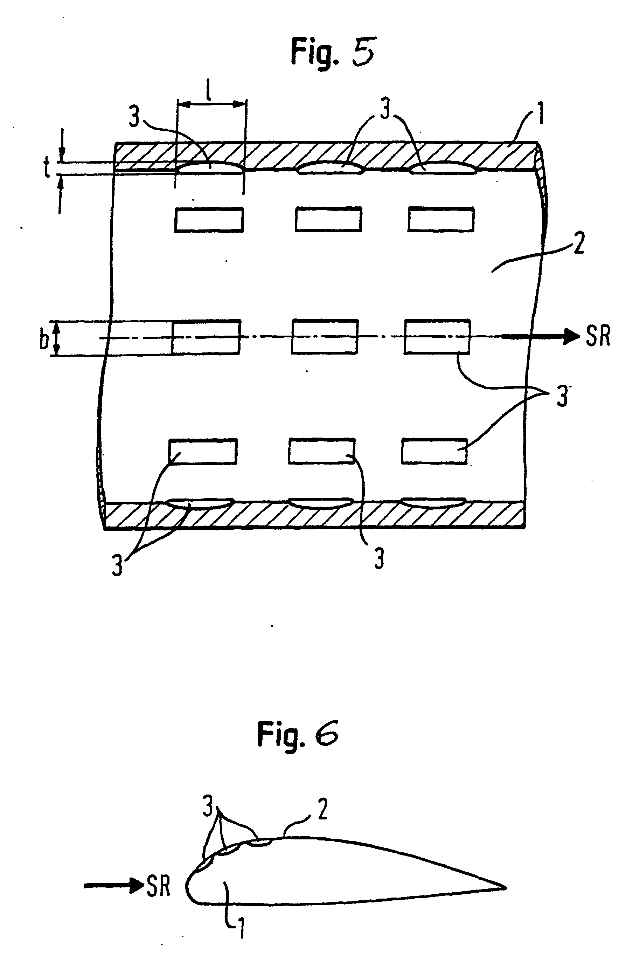

In Fig. 1 ist der Längsschnitt durch einen Teil eines als Düsenrohr ausgebildeten festen Körpers 1 gezeigt, der beispielsweise aus hartem Stahl bestehen kann. Die innere Mantelfläche des Rohres bildet die Wandfläche 2 für das durch den Rohrquerschnitt sehr schnell hindurchströmende Medium, beispielsweise Wasser. Im Unterschied zu der üblicherweise glatten oder nur durch axiale Längsrillen unterbrochenen Wandfläche 2 ist gemäß der Erfindung die Wandfläche 2 durch zahlreiche, in Strömungsrichtung (SR) hintereinander beabstandete Vertiefungen 3 unterbrochen. Sie können gemäß Fig. 5 sich im Längsschnitt auch etwa linsenförmig mit einer maximalen Tiefe t = 0,3 mm in den Werkstoff des Rohres erstrecken und zwar nicht über die gesamte axiale Länge des Rohres 1, sondern jeweils nur eine Länge 1 des etwa 5- bis 50fachen der Tiefe t. Diese Vertiefungen 3 können gemäß Figur 4 in Form einer im Querschnitt etwa dreieckförmigen Kerbe mit einem Kerbwinkel β zwischen insbesondere 80 und 100° ausgebildet sein. Der Grund bzw. Boden der kerbartigen Vertiefungen 3 zieht sich als Bodenlinie 4 im wesentlichen in Axialrichtung bzw. Strömungsrichtung SR des Rohres 1 hin und nimmt im Längsschnitt die in Figur 5 gezeigte linsenförmige Form an, wodurch dann jede jeweils ein Teil der jeweiligen Vertiefung eine in Strömungsrichtung SR entlang der Wandfläche 2 abnehmende Tiefe t aufweist. Derartige Vertiefungen 3 sind daher in Strömungsrichtung SR im Abstand voneinander an der Wandfläche 2 hintereinander angeordnet. Ebenso sind solche Vertiefungen 3 über den Umfang der inneren Mantelfläche bzw. Wandfläche 2 verteilt.

Die innere Rohrmantelfläche kann auch durch ein netzartiges System von Stegen gebildet sein, welche in der Aufsicht (vom Rohrinneren gesehen) rautenartige Vertiefungen 3 voneinander im Abstand halten, die wiederum sich im wesentlichen in Strömungsrichtung SR erstreckende Bodenlinien 4 aufweisen; diese Bodenlinien 4 verbinden jeweils die am weitesten beabstandeten Rautenecken jeder Raute. Bei dieser Ausbildung der Erfindung wird der größere Teil der Wandflächen von den Vertiefungen 3 eingenommen, während die Summe der Stege, welche die eigentliche Wandfläche 2 bilden, demgegenüber wesentlich kleiner ist. Durch Anwendung sehr schmaler Stege wird die Summe der auf die Wandflächen projizierten Vertiefungen 3 mit etwa 80 bis 95 % der Gesamtrohrmantelinnenfläche wesentlich größer als die von den Stegen gebildete verbliebene Wandfläche 2.

Die Hochdruck-Wasserdüse D nach Fig.1 weist einen Schraubeinsatz 10 aus beispielsweise INOX, das heißt nichtrostendem Stahl auf, in den ein ringförmiger Einsatz 5 aus Hartstoff, insbesondere Saphir, eingeklebt ist, dessen Durchtrittsöffnung 6 einen Durchmesser d von etwa 1 mm aufweist. In Strömungsrichtung vor dem Einsatz 5 ist eine Vorsatzbuchse 7 angeordnet, die als ein Körper 1 anzusehen ist, dessen Wandfläche 2 im Strömungskanal 8 die Strömung der unter hohem Druck hindurchgeleiteten Flüssigkeit, hier Wasser, ablenkt. Dabei ist der Durchmesser D des Strömungskanals 8 im Bereich des Übergangs zur zylindrischen Durchtrittsöffnung 6 des Einsatzes 5 mit 1,5 mm wesentlich größer als der Durchmesser d, so daß sich am Übergang eine Stau- bzw. Aufprallschulter 9 bildet, welche prima facie den Strömungswiderstand noch weiter erhöht.

Ferner weist der Strömungskanal 8 einen öffnungswinkel α entgegen der Strömungsrichtung SR auf. Dieser öffnungswinkel α sollte zwischen 2 und 13° betragen; besonders bevorzugt beträgt der Öffnungswinkel 3-4°.

Darüber hinaus ist der Strömungskanal 8 innen gemäß Fig. 2 im Querschnitt sechseckig ausgebildet, das heißt, daß er dort sechs Axialrinnen (F1, F2, F3 ...) mit verhältnismäßig scharfen Führungskanten 4 aufweist, die sich in Axialrichtung bzw. Strömungsrichtung SR erstrecken. Die Tiefe t dieser Axialrinnen beträgt am Eintrittsende des Strömungskanals 8 etwa 0,1 bis 0,8 mm, je nach Länge 1 des Strömungskanals 8, um den o.g. Öffnungswinkel einzuhalten, und verkleinert sich bis zur Stauschulter 9 am Einsatz 5 auf Null.

In Fig. 2a ist ein schematisches Schnittbild der oberen Hälfte der in Fig. 2 gezeigten Vorsatzbuchse 7 dargestellt, um zu verdeutlichen, daß durch die sechseckige Querschnittstrukturierung der inneren Mantelflächen Axialrinnen F1, F2 usw. gebildet werden, die sich im Bereich der Vertiefungen 3 zwischen den ebenen Teilen der inneren Rohrmantelfläche und dem gedachten Halbkreis ergeben, der sich bei bekannten zylindrischen bzw. konischen Querschnitten des Strömungskanals 8 solcher Vorsatzbuchsen 7 ergeben würde. Dieser Halbkreis ist bei der Erfindung nicht vorhanden ist, weil dort die Vertiefungen 3 in den Körper 1 der Buchse 7 hineingedrückt, eingefräst oder anderweitig aus diesem herausgearbeitet sind. Die Tiefe t der Vertiefungen 3 bemißt sich daher von diesem Halbkreis ausgehend bis zum "Nutengrund", der hier von der sich in Axialrichtung erstreckenden Kante 4 der betr. kerbförmigen Axialrinne F1, F2 gebildet wird. Dabei weisen die Flächen der Axialrinnen F1, F2, F3 bevorzugt gleichfalls Vertiefungen 3 auf, was nicht in Fig. 1 gezeigt aber in Fig. 2a angedeutet ist.

In Fig. 3 ist der erwartete Verlauf der Strömungslinien des strömenden Mediums angedeutet, das die Düse bzw. den Einsatz 4 als Strahl S verläßt. Es wird angenommen, daß um den "Kern" des Strahls S eine dünne "Grenzschicht" angeordnet ist, welche der Aufweitung des "Kerns" quer zur Strahlrichtung SR einen gewissen Widerstand entgegensetzt und hierdurch die Energie des Flüssigkeitsstrahls "zusammenhält" auf einen schmalen Bereich mit dem o.g. Effekt einer verbesserten Wirksamkeit und größerer Energiedichte an kinetischer Energie.

Gemäß Fig. 4 ist der Querschnitt des Strömungskanals 8 nicht sechseckig, sondern sternförmig. Dabei sind die Axialrinnen bzw. Vertiefungen 3 im Querschnitt etwa dreieckförmig; sie ragen aus dem etwa konischen Freiraum des Strömungskanals 8 in das Material des Körpers 1, das heißt der Vorsatzbuchse 7 hinein mit dem Kerbwinkeln β zwischen ein 8.80° und 100°.

Die Herstellung des erfiridungsgemäß ausgewählten Querschnitts des Strömungskanals 8 erfolgt beispielsweise dadurch, daß in eine Buchse oder Hülse 7 mit konischem Strömungsquerschnitt ein Mehrkantwerkzeug so weit eingedrückt bzw. eingeschlagen wird, daß sich die in Fig. 2 bis 4 ergebenden Querschnittsformen mit den dadurch gebildeten Vertiefungen 3 bzw. Axialrinnen F1, F2, F3 ergeben.

Die taschenartigen Vertiefungen 3, die sich flächig auf eine Länge 1 weit in Axialrichtung bzw. Strömungsrichtung SR des Rohrkörpers 1 von Fig. 5 erstrecken, stellen etwa konkave Vertiefungen dar, deren Breite b geringer sein sollte als deren Länge 1, aber deutlich größer als deren Tiefe t.

In Fig. 6 ist angedeutet, daß es zweckmäßig ist, die o.g. Vertiefungen 3 zumindest an derjenigen Wandfläche 2 des als Tragfläche eines Flugzeugs dienenden Körpers 1 anzuordnen, an der die Luftströmung in Strömungsrichtung SR entlang dieser abgelenkt wird. Überraschenderweise wird hierdurch die Umströmung der Wandfläche 2 am betreffenden Teil der Oberseite des Tragflügels so begünstigt, daß insgesamt eine bessere Wirksamkeit der Tragflügelumströmung erreichbar ist, um einen ablösungsarmen und daher auch wirbelfreieren Verlauf der Luftströmung bei der Profil Umströmung zu erreichen. Durch einige Versuche ist das Optimum der Tiefe, Lage, Ausdehnung und der Anzahl der Vertiefungen 3 in Abhängigkeit von der Form des Tragflügelprofils und von der Geschwindigkeit, mit dem das Flugzeug fliegt bzw. sich in bezug zum Tragflügel die umströmende Luft bewegt, zu ermitteln.

## Patentansprüche

1. Vorrichtung für verbesserte Wirksamkeit schnell an Wandflächen (2) eines festen Körpers (1) entlangströmender und insbesondere unter hohem Druck stehender Medien und/oder sich in einem Medium schnell entlangbewegender fester Körper (1), bei der mindestens eine Wandfläche (2) des festen Körpers (1) die Relativströmung (S) zwischen dem Medium und dem festen Körper (1) an mindestens einer Seite begrenzt und unter Bildung eines gewissen Strömungswiderstands in eine bestimmte Richtung lenkt, bei der die Wandfläche (2) eine Mehrzahl von sich mindestens eine Länge (1) weit in Strömungsrichtung (SR) erstreckenden Vertiefungen (3) aufweist, deren Tiefe (t) wesentlich kleiner ist als deren Länge (1), und bei der mindestens Teile der Vertiefungen (3) in Strömungsrichtung (SR) entlang der Wandfläche (2) eine abnehmende Tiefe (t) aufweisen,
**dadurch gekennzeichnet,**
**daß** die Vertiefungen (3) in Strömungsrichtung (SR) rinnenförmig ausgebildet sind und mindestens eine Unterbrechung der Wandfläche (2) in Strömungsrichtung (SR) bilden.

2. Vorrichtung nach Anspruch 1,
**dadurch gekennzeichnet,**
**daß** die Länge (1) der Vertiefungen (3) in Strömungsrichtung (SR) entlang der Wandfläche (2) wesentlich geringer ist als die Gesamtlänge der betreffenden die Strömung begrenzenden Wandfläche (2).

3. Vorrichtung nach Anspruch 1 oder 2,
**dadurch gekennzeichnet,**
**daß** der Körper (1) als Rohr und die Vertiefungen (3) als Einkerbungen in der inneren die Wandfläche (2) bildenden Rohrmantelfläche ausgebildet sind.

4. Vorrichtung nach einem der vorhergehenden Ansprüche,
**dadurch gekennzeichnet,**
**daß** die Vertiefungen (3) in Strömungsrichtung (SR) sich erstreckende Führungskanten (4) aufweisen.

5. Vorrichtung nach Anspruch 4,
**dadurch gekennzeichnet,**
**daß** die Vertiefungen (3) im Querschnitt des Rohres sternförmig angeordnet sind.

6. Vorrichtung nach einem der Ansprüche 1-5,
**dadurch gekennzeichnet,**
**daß** die Tiefe (t) der Vertiefungen zwischen 0,01 und 2 mm beträgt.

7. Vorrichtung nach Anspruch 6,
**dadurch gekennzeichnet,**
**daß** die Tiefe (t) der Vertiefungen zwischen 0,1 und 0,8 mm beträgt.

8. Vorrichtung nach einem der vorhergehenden Ansprüche,
**dadurch gekennzeichnet,**
**daß** der Öffnungswinkel (α) einer sich in Strömungsrichtung (SR) konisch verengenden Wandfläche (2) zwischen 2,8 und 3,8° beträgt.

9. Vorrichtung nach einem der vorhergehenden Ansprüche,
**dadurch gekennzeichnet,**
**daß** die Summe (Fₐ) der von Vertiefungen (3) eingenommenen Flächenanteile die Summe (F_{b}) der nicht von Vertiefungen (3) eingenommenen Flächenanteile an den Wandflächen (2) überwiegt.

10. Vorrichtung nach Anspruch 9,
**dadurch gekennzeichnet,**
**daß** das Summen-Verhältnis der Summe (Fₐ) der von Vertiefungen (3) eingenommenen Flächenanteile zu der Summe (F_{b}) der nicht von Vertiefungen (3) eingenommenen Flächenanteile an der Wandfläche größer als 0,7 ist.

11. Vorrichtung nach Anspruch 10,
**dadurch gekennzeichnet,**
**daß** das Summen-Verhältnis zwischen 0,8 und 0,95 beträgt und die Vertiefungen (3) an der Wandfläche (2) im wesentlichen nur durch schmale Stege getrennt sind.

12. Vorrichtung nach einem der vorhergehenden Ansprüche,
**dadurch gekennzeichnet,**
**daß** die Wandfläche (2) durch ein System von zueinander versetzten, in der Flächenabwicklung an der Wandfläche (2) rautenförmigen Vertiefungen (3) unterbrochen ist.

13. Vorrichtung nach einem der vorhergehenden Ansprüche,
**dadurch gekennzeichnet,**
**daß** die Vertiefungen (3) im Querschnitt dreieckförmig mit einem Kerbwinkel (β) zwischen 80 und 100° ausgebildet sind.

14. Hochdruck-Düse zum Erzeugen eines Hochdruck-Flüssigkeitsstrahles (S) mit einem Einsatz (5) aus insbesondere Hartstoff, dessen Durchtrittsöffnung (6) den Strahl der austretenden Flüssigkeit bestimmt, und mit einer Vorsatzhülse oder Vorsatzbuchse (7), durch deren Strömungskanal (8) die unter Hochdruck stehende Flüssigkeit der Durchtrittsöffnung (6) des Einsatzes (5) zuführbar ist, bei der der Strömungskanal (8) einen in Strömungsrichtung (SR) abnehmenden Durchschnittsquerschnitt mit einem Öffnungswinkel (α) entgegen der Strömungsrichtung (SR) aufweist,
**dadurch gekennzeichnet,**
**daß** der Strömungskanal (8) sich in Strömungsrichtung (SR) erstreckende Axialrinnen (F1, F2, F3) in der inneren Mantelfläche (2) aufweist, die an einer Unterbrechung der Wandfläche (2) in Strömungsrichtung in Form einer Stauschulter (9) des Einsatzes (5) enden und deren Tiefe (t) in Strömungsrichtung (SR) abnimmt.

15. Düse nach Anspruch 14,
**dadurch gekennzeichnet,**
**daß** der Öffnungswinkel (α) des Strömungskanals (8) der Vorsatzbuchse (7) zwischen 2 und 4° beträgt.

16. Düse nach Anspruch 14 oder 15,
**dadurch gekennzeichnet,**
**daß** zur Bildung der Stauschulter (8) der Durchmesser (d) der Durchtrittsöffnung (6) des Einsatzes (5) wesentlich kleiner ist als der Durchschnittsquerschnitt (D) des Strömungskanals (8) am Übergang zum Einsatz (5).

17. Verwendung der Vorrichtung nach einem der Ansprüche 1 bis 13 bei Pipeline-Rohren.

18. Verwendung der Vorrichtung nach einem der Ansprüche 1 bis 13 bei Vergasern für Verbrennungsmotoren im Ansaugrohr oder Ansaugkrümmer.

19. Verwendung der Vorrichtung nach einem der Ansprüche 1 bis 13 bei Verbrennungsmotoren im Abgasrohr oder Abgaskrümmern.

20. Verwendung der Vorrichtung nach einem der Ansprüche 1 bis 13 bei Luftfahrzeugen an Strömungsflächen derselben oder bei Geschossen, wie Raketen.

21. Verwendung der Vorrichtung nach einem der Ansprüche 1 bis 13 bei Turbinen.

## Claims

1. Device for increasing the power of media flowing fast along the wall surfaces (2) of a solid body (1) and, more particularly, media being under high pressure and/or solid bodies (1) moving very fast in a medium, wherein at least one wall surface (2) of the solid body (1) limits the relative flow (S) between the medium and the solid body (1) on at least one side and guides it in a specific direction, while forming a certain flow resistance, and wherein the wall surface (2) comprises a plurality of recesses (3) extending at least over a length (1) in the direction of flow (SR), whose depth (t) is substantially smaller than their length (1) and wherein at least parts of the recesses (3) have a depth (t) diminishing in the direction of flow (SR) along the wall surface (2)
**characterised in**
**that** the recesses (3) are groove-shaped in the direction of flow (SR) and form at least one interruption of the wall surface (2) in the direction of flow (SR).

2. A device according to claim 1,
**characterised in**
**that** the length (1) of the recesses (3) in the direction of flow (SR) along the wall surface (2) is substantially smaller than the overall length of the respective wall surface (2) limiting the flow.

3. A device according to claim 1 or 2,
**characterised in**
**that** the body (1) is formed as a tube and the recesses (3) are formed as notches in the inner lateral tube area constituting the wall surface (2).

4. A device according to any of the preceding claims,
**characterised in**
**that** the recesses (3) comprise guiding edges (4) extending in the direction of flow (SR).

5. A device according to claim 4,
**characterised in**
**that** the recesses (3) are disposed in a star shape in the cross-section of the tube.

6. A device according to any of claims 1 to 5,
**characterised in**
**that** the depth (t) of the recesses is between 0.01 and 2 mm.

7. A device according to claim 6,
**characterised in**
**that** the depth (t) of the recesses is between 0.1 and 0.8 mm.

8. A device according to any of the preceding claims,
**characterised in**
**that** the opening angle (α) of a wall surface (2) conically tapered in the direction of flow (SR) is between 2.8 and 3.8°.

9. A device according to any of the preceding claims,
**characterised in**
**that** the sum (Fₐ) of the surface proportions occupied by recesses (3) is larger than the sum (F_{b}) of surface proportions not occupied by recesses (3) on the wall surfaces (2).

10. A device according to claim 9,
**characterised in**
**that** the sum ratio between the sum (Fₐ) of the surface proportions occupied by recesses (3) and the sum (F_{b}) of surface proportions not occupied by recesses (3) on the wall surface (2) is higher than 0.7.

11. A device according to claim 10,
**characterised in**
**that** the sum ratio is between 0.8 and 0.95 and the recesses (3) an the wall surface (2) are substantially separated by small webs only.

12. A device according to any of the preceding claims,
**characterised in**
**that** the wall surface (2) is interrupted by a system of recesses (3) being offset with respect to each other and being lozenge-shaped in the surface layout of the wall surface (2).

13. A device according to any of the preceding claims,
**characterised in**
**that** the recesses (3) are formed to have a triangular cross-section with a notch angle (β) between 80 and 100°.

14. A high pressure nozzle for producing a high pressure liquid jet (S) having an insert (5) of a hard material, in particular, whose passage opening (6) determines the jet of the exiting liquid, and an attachment sleeve or bushing (7) through the flow channel (8) of which the liquid being under high pressure may be supplied to the passage opening (6) of the insert (5), wherein the flow channel (8) comprises an average cross-section diminishing in the direction of flow (SR) with an opening angle (α) against the direction of flow (SR),
**characterised in**
**that** the flow channel (8) comprises axial grooves (F1, F2, F3) in the inner lateral area (2) which extend in the direction of flow (SR) and terminate at an interruption of the wall surface (2) in the direction of flow, in the form of a retaining shoulder (9) of the insert (5), and whose depth (t) diminishes in the direction of flow (SR).

15. A nozzle according to claim 14,
**characterised in**
**that** the opening angle (α) of the flow channel (8) of the attachment bushing (7) is between 2 and 4°.

16. A nozzle according to claim 14 or 15,
**characterised in**
**that**, in order to form the retaining shoulder (8), the diameter (d) of the passage opening (6) of the insert (5) is substantially smaller than the average cross-section (D) of the flow channel (8) at the transition to the insert (5).

17. Use of the device according to any of claims 1 to 13 for pipeline tubes.

18. Use of the device according to any of claims 1 to 13 for carburettors for internal combustion engines in the suction pipe or suction manifold.

19. Use of the device according to any of claims 1 to 13 for internal combustion engines in the exhaust gas tube or in exhaust manifolds.

20. Use of the device according to any of claims 1 to 13 for aircraft, on flow surfaces thereof, or for missiles like rockets.

21. Use of the device according to any of claims 1 to 13 for turbines.

## Revendications

1. Dispositif pour améliorer l'efficacité de milieux s'écoulant rapidement sur des surfaces de paroi (2) d'un corps fixe (1) et se trouvant en particulier sous pression et/ou de corps fixes (1) se déplaçant rapidement dans un milieu, dans lequel au moins une surface de paroi (2) du corps fixe (1) limite, sur au moins un côté, l'écoulement relatif (S) entre le milieu et le corps fixe (1) et, en formant une certaine résistance à l'écoulement, le dirige dans une direction déterminée, dans lequel la surface de paroi (2) comporte une pluralité de renfoncements (3) s'étendant au moins sur une longueur (1) dans le sens d'écoulement (SR), dont la profondeur (t) est sensiblement inférieure à leur longueur (1), et dans lequel au moins des parties des renfoncements (3) présentent, dans le sens d'écoulement (SR), le long de la surface de paroi (2), une profondeur (t) décroissante,
**caractérisé en ce que**
les renfoncements (3) ont la forme de rigoles dans le sens d'écoulement (SR) et forment au moins une interruption de la surface de paroi (2) dans le sens d'écoulement (SR).

2. Dispositif selon la revendication 1,
**caractérisé en ce que**
la longueur (1) des renfoncements (3) dans le sens d'écoulement (SR) le long de la surface de paroi (2) est sensiblement inférieure à la longueur totale de la surface de paroi (2) concernée limitant l'écoulement.

3. Dispositif selon la revendication 1 ou 2,
**caractérisé en ce que**
le corps (1) est réalisé sous la forme d'un tube et les renfoncements (3) sous la forme d'encoches dans la surface d'enveloppe intérieure tubulaire formant la surface de paroi (2).

4. Dispositif selon l'une des revendications précédentes,
**caractérisé en ce que**
les renfoncements (3) présentent des bords de guidage (4) qui s'étendent dans le sens d'écoulement (SR).

5. Dispositif selon la revendication 4,
**caractérisé en ce que**
les renfoncements (3) sont disposés en étoile dans la section transversale du tube.

6. Dispositif selon l'une des revendications 1 à 5,
**caractérisé en ce que**
la profondeur (t) des renfoncements est comprise entre 0,01 et 2 mm.

7. Dispositif selon la revendication 6,
**caractérisé en ce que**
la profondeur (t) des renfoncements est comprise entre 0,1 et 0,8 mm.

8. Dispositif selon l'une des revendications précédentes,
**caractérisé en ce que**
l'angle d'ouverture (α) d'une surface de paroi (2) se rétrécissant coniquement dans le sens d'écoulement (SR) est compris entre 2,8 et 3,8°.

9. Dispositif selon l'une des revendications précédentes,
**caractérisé en ce que**
la somme (Fa) des parties de surface occupées par des renfoncements (3) ne dépasse pas la somme (Fb) des parties de surface, non occupées par des renfoncements (3), sur les surfaces de paroi (2).

10. Dispositif selon la revendication 9,
**caractérisé en ce que**
le rapport de la somme (Fa) des parties de surface occupées par des renfoncements (3) à la somme (Fb) des parties de surface non occupées par des renfoncements (3) sur la surface de paroi, est supérieur à 0,7.

11. Dispositif selon la revendication 10,
**caractérisé en ce que**
le rapport des sommes est compris entre 0,8 et 0,95 et les renfoncements (3) sur la surface de paroi (2) ne sont sensiblement séparés que par d'étroites entretoises.

12. Dispositif selon l'une des revendications précédentes,
**caractérisé en ce que**
la surface de paroi (2) est interrompue par un système de renfoncements (3) décalés les uns par rapport aux autres, en forme de losange dans le développement des surfaces sur la surface de paroi (2).

13. Dispositif selon l'une des revendications précédentes,
**caractérisé en ce que**
les renfoncements (3) présentent une section transversale de forme triangulaire avec un angle d'entaille (β) compris entre 80 et 100°.

14. Buse de pression pour produire un jet de liquide haute pression (S) comportant un insert (5) en particulier en matière dure dont l'orifice de passage (6) détermine le jet du liquide sortant, et comportant une douille d'adaptation (7) à travers le canal d'écoulement (8) de laquelle le liquide sous haute pression peut être amené à l'orifice de passage (6) de l'insert (5), dans laquelle le canal d'écoulement (8) présente une section transversale moyenne diminuant dans le sens d'écoulement (SR) avec un angle d'ouverture (α) dans le sens contraire au sens d'écoulement (SR),
**caractérisée en ce que**
le canal d'écoulement (8) comporte des rigoles axiales (F1, F2, F3) s'étendant dans le sens d'écoulement (SR) dans la surface d'enveloppe (2), lesquelles se terminent sur une interruption de la surface de paroi (2) dans le sens d'écoulement, sous la forme d'un épaulement de retenue (9) de l'insert (5) et dont la profondeur (t) diminue dans le sens d'écoulement (SR).

15. Buse selon la revendication 14,
**caractérisée en ce que**
l'angle d'ouverture (α) du canal d'écoulement (8) de la douille d'adaptation (7) est compris entre 2 et 4°.

16. Buse selon la revendication 14 ou 15,
**caractérisée en ce que**
pour former l'épaulement de retenue (8), le diamètre (d) de l'orifice de passage (6) de l'insert (5) est sensiblement inférieur à la section moyenne (D) du canal d'écoulement (8) à la transition avec l'insert (5).

17. Utilisation du dispositif selon l'une des revendications 1 à 13 pour des pipelines.

18. Utilisation du dispositif selon l'une des revendications 1 à 13 dans des carburateurs de moteurs à combustion interne dans la tubulure d'aspiration ou des collecteurs d'admission.

19. Utilisation du dispositif selon l'une des revendications 1 à 13 dans des moteurs à combustion interne dans la tubulure d'aspiration ou des collecteurs d'admission.

20. Utilisation du dispositif selon la revendication 1 à 13 dans des avions sur les surfaces d'écoulement de ceux-ci ou dans des projectiles, tels que des missiles.

21. Utilisation du dispositif selon l'une des revendications 1 à 13 dans des turbines.
